# EUROPÄISCHE PATENTSCHRIFT

(11) **EP 0 783 590 B1**
(45) Veröffentlichungstag und Bekanntmachung des Hinweises auf die Patenterteilung: **01.04.1998**
(21) Anmeldenummer: 95930326.4
(22) Anmeldetag: 14.09.1995
(51) Int. Cl.: C21B 13/00, C22B 1/10

(54) **VERFAHREN ZUM REDUZIEREN VON OXIDHÄLTIGEM MATERIAL UND ANLAGE ZUR DURCHFÜHRUNG DES VERFAHRENS**
PROCESS FOR REDUCING OXIDE-CONTAINING MATERIAL AND SYSTEM FOR CARRYING OUT THIS PROCESS
PROCEDE DE REDUCTION DE MATERIAUX CONTENANT DES OXYDES ET INSTALLATION POUR LA MISE EN OEUVRE DE CE PROCEDE

(30) Priorität: 27.09.1994 AT 1839/94
(43) Veröffentlichungstag der Anmeldung: 16.07.1997
(73) Patentinhaber: VOEST-ALPINE INDUSTRIEANLAGENBAU GMBH, 4020 Linz (AT); Brifer International Ltd., Bridgetown (BB)
(72) Erfinder: KEPPLINGER, Leopold, Werner, A-4060 Leonding (AT); ZELLER, Siegfried, A-4060 Leonding (AT); ZIMMERBAUER, Karl-Heinz, A-4483 Hargelsberg (AT); WHIPP, Roy, Hubert, Jr., Windermere, FL 34786 (US)
(74) Vertreter: Kopecky, Helmut, Dipl.-Ing. Kopecky & Schwarz Patentanwälte
(86) Internationale Anmeldenummer: AT9500180
(87) Internationale Veröffentlichungsnummer: WO9610094

(56) Entgegenhaltungen:
- DE-A- 3 831 174
- DE-C- 975 892
- FR-A- 1 058 078
- FR-A- 1 069 849
- US-A- 2 742 353
- US-A- 3 053 648
- US-A- 3 591 363
- PATENT ABSTRACTS OF JAPAN vol. 13 no. 585 (C-669) ,22.Dezember 1989 & JP,A,01 242724 (NIPPON STEEL CORP) 27.September 1989,

## Beschreibung

Die Erfindung betrifft ein Verfahren zum Reduzieren von teilchenförmigem oxidhältigem Material, insbesondere Feinerz, im Wirbelschichtverfahren, wobei das oxidhältige Material durch ein von unten nach oben strömendes Reduktionsgas in einer Wirbelschicht gehalten und dabei reduziert wird, sowie eine Anlage zur Durchführung des Verfahrens.

Ein Verfahren dieser An ist beispielsweise aus der US-A - 2,909,423, der WO 92/02458 und der EP-A - 0 571 358 bekannt. Hierbei erfolgt die Reduktion des oxidhältigen Materials, z.B. von Feinerz, in einer von einem Reduktionsgas aufrecht erhaltenen Wirbelschicht innerhalb eines Wirbelschicht-Reduktionsreaktors, wobei das Reduktionsgas, das über einen Düsenrost in den Wirbelschicht-Reduktionsreaktor eingeleitet wird, den Reduktionsreaktor von unten nach oben durchströmt, wogegen das oxidhältige Material den Reduktionsreaktor etwa im Querstrom zum Reduktionsgasstrom durchsetzt. Für das Aufrechterhalten der Wirbelschicht ist eine bestimmte Geschwindigkeit des Reduktionsgases innerhalb der Wirbelschichtzone erforderlich.

Aufgrund der relativ hohen Geschwindigkeit des Reduktionsgases kommt es zu einem Austragen von Feinstanteilen des oxidhältigen Materials sowie bei fortgeschrittener Reduktion zu einem Austragen von bereits reduziertem oxidhältigem Material, aus der Wirbelschicht, wobei diese Feinstanteile dann im Reduktionsgas enthalten sind. Um diese Feinstanteile aus dem Reduktionsgas zu entfernen - einerseits um das teiloxidierte Reduktionsgas weiterverwenden zu können, beispielsweise für vorgeordnete Reduktionsreaktoren, bzw. zur Rückgewinnung des sonst in Verlust geratenen oxidhältigen Materials bzw. bereits reduzierten Materials -, wird das die Feinstanteile enthaltende Reduktionsgas durch Staubabscheider, wie Zyklone geführt, und es wird der abgeschiedene Staub wieder in die Wirbelschicht zurückgeführt. Die Staubabscheider bzw. Zyklone sind vorzugsweise innerhalb der Reaktoren angeordnet (vgl. US-A - 2,909,423); sie können jedoch auch außerhalb der Reaktoren installiert sein.

In der Praxis hat sich nun gezeigt, daß teilreduzierte bzw. ausreduzierte feinkörnige Teilchen des oxidhältigen Materials dazu neigen, aneinander und/oder an den Wänden der Reaktoren bzw. Zyklone und Verbindungsleitungen bzw. Förderleitungen festzukleben bzw. anzubacken. Dieses Phänomen wird als "sticking" bzw. "fouling" bezeichnet. Das "sticking" respektive "fouling" ist abhängig von der Temperatur und dem Reduktionsgrad des oxidhältigen Materials. Durch das Festkleben bzw. Anlegen des teil- oder ausreduzierten oxidhältigen Materials an den Wänden der Reduktionsreaktoren bzw. anderen Anlagenteilen kann es zu Störungen kommen, so daß es nicht möglich ist, die Anlage ohne Abstellen kontinuierlich über einen längeren Zeitraum zu betreiben. Es hat sich gezeigt, daß ein Abstellen der Anlage alle drei bis vier Monate erforderlich ist.

Das Entfernen der Anlegungen bzw. Anbackungen ist sehr arbeitsintensiv und verursacht hohe Kosten, u.zw. Arbeitskosten sowie Kosten, die durch den Produktionsausfall der Anlage bedingt sind. Oftmals kommt es zu einem selbsttätigen Ablösen der Anlegungen, wodurch diese entweder in die Wirbelschicht fallen und so zu einer Störung des Reduktionsprozesses führen, oder - wenn die Anlegungen sich vom Zyklon lösen - eine Verlegung der vom Zyklon zur Wirbelschicht führenden Staubrückführungskanäle bewirken, so daß eine weitere Staubabscheidung aus dem Reduktionsgas gänzlich unmöglich ist.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, welche ein Reduzieren von teilchenförmigem oxidhältigem Material über einen sehr langen Zeitraum ohne die Gefahr von durch "sticking" bzw. "fouling" verusachten Betriebsunterbrechungen ermöglichen.

Diese Aufgabe wird erfindungsgemäß dadurch gelöst, daß die Leerrohrgeschwindigkeit des Reduktionsgases ausschließlich oberhalb der Wirbelschicht über den gesamten freien Querschnitt eines oberhalb der Wirbelschicht vorhandenen Raumes kontinuierlich und unter Vermeidung von Wirbelbildungen abgesenkt wird.

Durch diese Maßnahme gelingt es, trotz einer hohen Gasgeschwindigkeit des Reduktionsgases innerhalb der Wirbelschicht durch eine entscheidende Verringerung des Austragens von oxidhältigem Material bzw. teil- oder fertigreduziertem Material durch das Reduktionsgas eine effiziente Vermeidung von "sticking" und "fouling" zu erzielen. Es hat sich nämlich herausgestellt, daß, sobald die Menge der mit dem Reduktionsgas mitgerissenen Teilchen einen bestimmten Maximalwert unterschreitet, ein "sticking" bzw. "fouling" sehr stark reduziert ist, so daß hierdurch verursachte Betriebsunterbrechungen vermieden werden.

Von großer Bedeutung ist, daß die Strömung des Reduktionsgases oberhalb der Wirbelschicht im wesentlichen so verläuft, daß keine Wirbelbildungen auftreten. Solche Wirbel würden nämlich die Verringerung des Austragens von Feinstteilchen entscheidend behindern. Es kommt also erfindungsgemäß darauf an, daß die Strömungsgeschwindigkeit des Reduktionsgases, d.h. seine Leerrohrgeschwindigkeit, über den gesamten freien Querschnitt des oberhalb der Wirbelschicht vorhandenen Raumes verringert wird; es dürfen hier keine Wirbelbildungen auftreten.

Die Reduktion der Leerrohrgeschwindigkeit des Reduktionsgases läßt nicht nur längere ununterbrochene Betriebszeiten der Reduktionsreaktoren, sondern auch der Zyklone und aller übrigen Anlagenteile mit Neigung zu "sticking" und "fouling" (Förderrohre etc.) erwarten. Ein weiterer Vorteil der Erfindung ist darin zu sehen, daß der Anteil von Feinkorn im teilchenförmigen oxidhältigen Material ohne Gefahr einer Prozeßstörung erhöht werden kann, wodurch eine Steigerung der Flexibilität des Reduktionsverfahrens erzielt werden kann.

Da sich gezeigt hat, daß "sticking" bzw. "fouling" vermehrt dann auftritt, wenn das oxidhältige Material bereits höhere Reduktionsgrade aufweist, wird gemäß einer bevorzugten Ausführungsform der Erfindung bei stufenweisem Reduzieren des oxidhältigen Materials in hintereinander angeordneten Wirbelschichten, bei dem eine Zunahme des Reduktionsgrades von Stufe zu Stufe stattfindet, die Absenkung der Leerrohrgeschwindigkeit des Reduktionsgases ab der Stufe durchgeführt, ab der ein Mindestreduktionsgrad von 25 % erzielt wird.

Vorzugsweise wird die Absenkung der Leerrohrgeschwindigkeit des Reduktionsgases ab der Stufe durchgeführt, ab der ein Mindestreduktionsgrad von 50 % erzielt wird.

Eine wesentliche Steigerung der ununterbrochenen Betriebszeit einer Anlage ist dann erzielbar, wenn die Leerrohrgeschwindigkeit des Reduktionsgases oberhalb der Wirbelschicht um mindestens 25 %, vorzugsweise um mindestens 50 %, abgesenkt wird, wobei vorteilhaft die Leerrohrgeschwindigkeit des Reduktionsgases von eingangsseitig 0,8 m/s bis 1,5 m/s auf ausgangseitig 0.4 m/s bis 0,75 m/s abgesenkt wird.

Vorzugsweise wird die Leerrohrgeschwindigkeit in der Wirbelschicht und in einem Raum oberhalb des Raumes, in dem die Absenkung der Leerrohrgeschwindigkeit des Reduktionsgases durchgeführt wird, im wesentlichen konstant gehalten.

Bei einer Anlage zur Durchführung des Verfahrens mit mindestens einem Wirbelschicht-Reduktionsreaktor weist dieser folgende Komponenten auf:
- einen zylindrischen unteren, die Wirbelschicht aufnehmenden Wirbelschichtteil mit einem Gasverteilungsboden, eine Zuleitung für das Reduktionsgas und eine Zuführung und Abführung für oxidhältiges Material oberhalb des Gasverteilungsbodens,
- einen oberhalb des Wirbelschichtteiles angeordneten und an diesen anschließenden, sich nach oben konisch erweiternden Konusteil, wobei die Neigung der Wand des Konusteiles zur Reaktormittelachse maximal 10° beträgt, und
- einen an den Konusteil anschließenden zumindest teilweise zylindrischen Beruhigungsteil, der oben geschlossen ist und von dem eine Reduktionsgas-Ableitung ausgeht.

Zweckmäßig nimmt der Leerrohrquerschnitt im Konusteil um mindestens 25 %, vorzugsweise um mindestens 50 %, zwischen Eintrittsquerschnitt und dem Austrittsquerschnitt des Konusteiles zu.

Vorzugsweise ist mindestens ein Staubabscheider innerhalb des Reduktionsreaktors angeordnet, wobei dessen Eintrittsöffnung für das staubbeladene Reduktionsgas im Bereich des Beruhigungsteiles angeordnet ist und eine Staubrückführleitung des Staubabscheiders bis in den Wirbelschichtteil ragt

Ein Abreißen der Strömung und damit Wirbelbildung des Reduktionsgases innerhalb des Konusteiles wird mit großer Sicherheit dann vermieden, wenn die Neigung der Wand des Konusteiles zur Reaktormittelachse maximal 8° beträgt, wobei zweckmäßig die Neigung der Wand des Konusteiles zur Reaktormittelachse in einem Bereich zwischen 6° und 8° liegt.

Wenn die Anlage eine Mehrzahl von hintereinander geschalteten Wirbelschicht-Reduktionsreaktoren umfaßt, die mittels Reduktionsgasleitungen und das oxidhältige Material von Reaktor zu Reaktor führenden Leitungen verbunden sind, sind lediglich die in Fließrichtung des oxidhältigen Materials zuletzt vorgesehenen Reaktoren, vorzugsweise nur der zuletzt angeordnete Reaktor, mit einem Konusteil versehen.

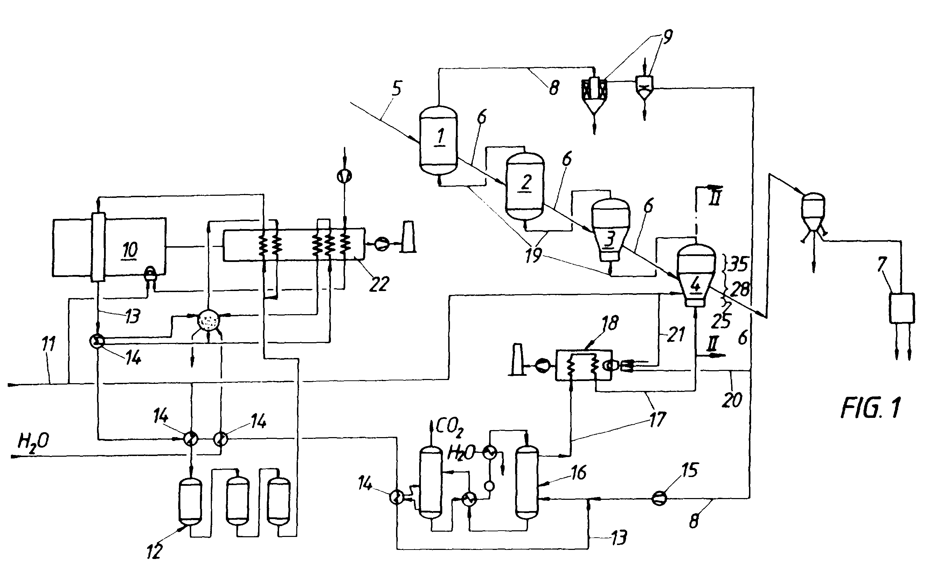

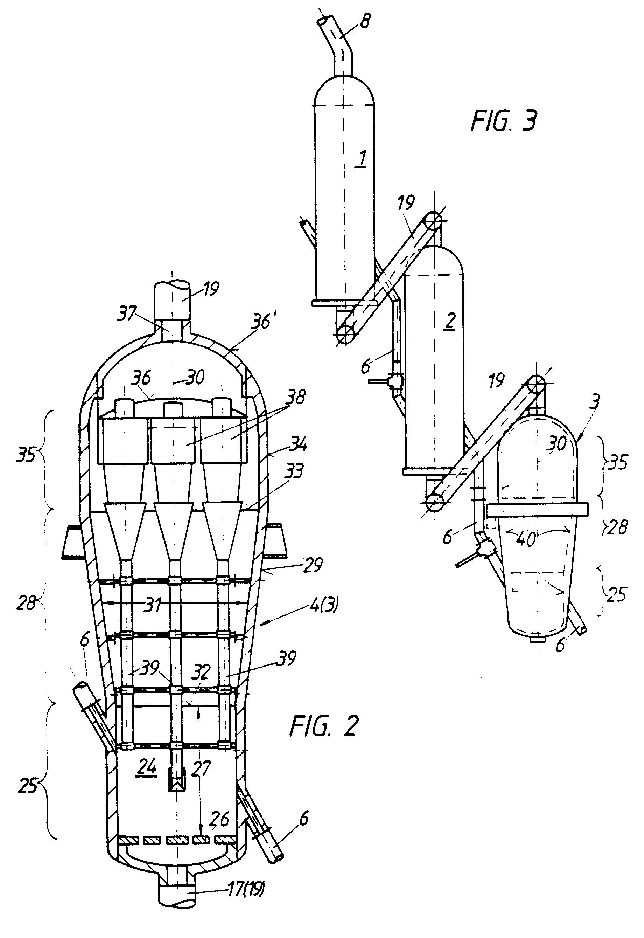

Die Erfindung ist nachfolgend anhand der Zeichnung näher erläutert, wobei die Fig. 1 ein Verfahrensschema nach einer ersten Ausführungsform zeigt und die Fig. 2 einen Querschnitt durch einen Wirbelschicht-Reduktionsreaktor der Fig. 1 gemäß der Linie II-II der Fig. 1 veranschaulicht. In Fig. 3 ist eine stufenförmige Anordnung von vier Reduktionsreaktoren gemäß einer weiteren Ausführungsform schematisch dargestellt.

Die erfindungsgemäße Anlage weist vier in Serie hintereinander geschaltete Wirbelschicht-Reduktionsreaktoren 1 bis 4 auf, wobei eisenoxidhältiges Material, wie Feinerz, über eine Erzzuleitung 5 dem ersten Wirbelschicht-Reduktionsreaktor 1 und von Wirbelschicht-Reduktionsreaktor zu Wirbelschicht-Reduktionsreaktor über Förderleitungen 6 geleitet und das fertig reduzierte Material (Eisenschwamm) in einer Brikettieranlage 7 heißbrikettiert wird. Erforderlichenfalls wird das reduzierte Eisen vor Reoxidation während der Brikettierung durch ein nicht dargestelltes Inertgas-System geschützt

Vor Einleitung des Feinerzes in den ersten Reduktionsreaktor 1 wird es einer Erzvorbereitung, wie einer Trocknung und einem Sieben, unterzogen, die nicht näher dargestellt ist.

Reduktionsgas wird im Gegenstrom zum Erzdurchfluß von Reduktionsreaktor 4 zu Reduktionsreaktor 3 bis 1 geführt und als Topgas über eine Topgas-Ableitung 8 aus dem in Gasströmungsrichtung letzten Reduktionsreaktor 1 abgeleitet und in einem Naßwäscher 9 gekühlt und gewaschen.

Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete reformierte Gas besteht im wesentlichen aus H₂, CO, CH₄, H₂O und CO₂. Dieses reformierte Gas wird über die Reformgasleitung 13 mehreren Wärmetauschern 14 zugeleitet, in denen es abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das sich so bildende Mischgas wird durch einen CO₂-Wäscher 16 hindurchgeschickt und von CO₂ befreit, und es steht nunmehr als Reduktionsgas zur Verfügung. Dieses Reduktionsgas wird über die Reduktionsgas-Zuleitung 17 in einem dem CO₂-Wäscher 16 nachgeordneten Gaserhitzer 18 auf eine Reduktionsgas-Temperatur von etwa 800°C erhitzt und dem in Gas-Durchflußrichtung ersten Wirbelschichtreaktor 4 zugeführt, wo es mit den Feinerzen zur Erzeugung von direktreduziertem Eisen reagiert. Die Reduktionsreaktoren 4 bis 1 sind in Serie geschaltet; das Reduktionsgas gelangt über die Verbindungsleitungen 19 von Reduktionsreaktor zu Reduktionsreaktor.

Ein Teil des Topgases wird aus dem Gas-Kreislauf 8, 17, 19 ausgeschleust, um eine Anreicherung von Inertgasen wie N₂, zu vermeiden. Das ausgeschleuste Topgas wird über eine Zweigleitung 20 dem Gaserhitzer 18 zur Erwärmung des Reduktionsgases zugeführt und dort verbrannt. Eventuell fehlende Energie wird durch Erdgas, welches über die Zuleitung 21 zugeführt wird, ergänzt.

Die fühlbare Wärme des aus dem Reformer 10 austretenden reformierten Gases sowie der Reformerrauchgase wird in einem Rekuperator 22 genutzt, um das Feedgas (=Erdgas-Wasserdampfgemisch) nach Durchlauf vorzuwärmen und den für die Reformierung benötigten Dampf zu erzeugen. Die dem Reformer 10 zugeführte Verbrennungsluft wird ebenfalls vorgewärmt.

Gemäß der in Fig. 1 dargestellten Ausführungsform der Reduktionsanlage sind die beiden in Förderrichtung des Feinerzes zuletzt angeordneten Reduktionsreaktoren 3 und 4 folgendermaßen aufgebaut (vgl. Fig. 2):

Jeder Reduktionsreaktor 3, 4 weist einen zylindrischen unteren, eine Wirbelschicht 24 aufnehmenden Wirbelschichtteil 25 auf, der in einer bestimmten Höhe mit einem als Düsenrost 26 ausgebildeten Gasverteilerboden zur Zuführung und gleichmäßigen Verteilung des Reduktionsgases versehen ist. Das Reduktionsgas durchströmt den Reduktionsreaktor 3 bzw. 4 ausgehend vom Düsenrost 26 von unten nach oben. Oberhalb des Düsenrostes 26 und noch innerhalb des zylindrischen Wirbelschichtteiles 25 münden die Förderleitungen 6 (Zu- und Abführungen) für das Feinerz. Die Wirbelschicht 24 weist eine Schichthöhe 27 vom Düsenrost 26 bis über die Höhe der Zu- bzw. Abführung 6 für das Feinerz auf.

An den zylindrischen Wirbelschichtteil 25 schließt ein sich nach oben konisch erweitemder Konusteil 28 an, wobei die Neigung der Wand 29 dieses Konusteiles 28 zur Reaktormittelachse 30 maximal 10°, vorzugsweise 6 bis 8°, beträgt. In diesem Bereich kommt es durch die kontinuierliche Vergrößerung des Querschnittes 31 zu einer stetig und kontinuierlich zunehmenden Herabsetzung der Leerrohrgeschwindigkeit des nach oben strömenden Reduktionsgases. Die Vergrößerung des Querschnittsraumes soll derart ausgeführt sein, daß der Leerrohrquerschnitt im Konusteil 28 vom Eintrittsquerschnitt 32 bis zum Austrittsquerschnitt 33 mindestens 25 %, vorzugsweise mindestens 50 %, beträgt.

Durch die nur geringe Neigung der Wand 29 des Konusteiles 28 gelingt es, trotz der Erweiterung des Querschnittes 31 in diesen Konusteil 28 eine Strömung ohne Wirbelbildung und Abreißen von der Wand 29 zu erzielen. Hierdurch werden Wirbelbildungen, die eine örtliche Erhöhung der Geschwindigkeit des Reduktionsgases hervorrufen würden, vermieden. Dadurch ist eine gleichmäßige und kontinuierliche Herabsetzung der Leerrohrgeschwindigkeit des Reduktionsgases über den gesamten Querschnitt 31 des Konusteiles 28 in jeder Höhe desselben gewährleistet.

Am oberen Ende des Konusteiles 28 schließt ein mit einer zylindrischen Wand 34 versehener Beruhigungsteil 35 an, der oben mit einer teil-kugelförmig gestalteten Decke 36 geschlossen ist. In der oberhalb der Decke 36 angeordneten Reaktordecke 36' ist zentral eine Öffnung 37 zur Ableitung des Reduktionsgases angeordnet, welches Reduktionsgas über die an die Öffnung 37 anschließende Verbindungseitung 19 dem vorgeordneten Reduktionsreaktor 3 bzw. 2 zugeführt wird.

Im Inneren des Reduktionsreaktors sind der Staubabscheidung für das Reduktionsgas dienende Zyklone 38 vorgesehen, die im zylindrischen Abschnitt des Beruhigungsteiles 35 angeordnet sind. Von den Zyklonen 38 ausgehende Staubrückführleitungen 39 sind vertikal nach unten gerichtet und münden in die Wirbelschicht 24. Die Gasableitungen der Zyklone 38 münden in den zwischen der Decke 36 und der Reaktordecke 36' liegenden Raum.

Die Reduktionsgrade des Feinerzes liegen beim Reduktionsreaktor 1 bei etwa 8 %, beim Reduktionsreaktor 2 bei etwa 31 %, beim Reduktionsreaktor 3 bei etwa 72 % und beim Reduktionsreaktor 4 bei etwa 95 %.

Durch die Herabsetzung der Reduktionsgasgeschwindigkeit in den beiden Reduktionsreaktoren 3 und 4 von 1,2 m/s im Wirbelschichtteil 25 auf 0,6 m/s am oberen Ende des Konusteiles 28 kann die Staubbelastung der Zyklone 38 von ca. 3000 g/m³ auf etwa 650 g/m³ herabgesetzt werden. Hierdurch ist eine durchschnittliche Verlängerung der Zeit, in der die Anlage ununterbrochen in Betrieb bleiben kann, von mehr als sechs Monaten erzielbar.

Gemäß der in Fig. 3 dargestellten Ausführungsform eines Teiles der Reduktionsanlage sind ebenfalls drei Reduktionsreaktoren 1 bis 3 hintereinander geschaltet angeordnet, wobei jedoch nur der in Durchflußrichtung des Feinerzes zuletzt angeordnete Reduktionsreaktor 4 mit einem Konusteil 28 versehen ist. Bei diesem zuletzt angeordneten Reduktionsreaktor ist zwar die metallische Außenwand bis zum Boden des Reaktors konisch ausgeführt, jedoch ist auch hier ein Wirbelschichtteil 25 vorgesehen, der von einer zylindrischen Wand begrenzt ist, wie aus den strichlierten Linien, die die Innenwand 40 des Reduktionsreaktor 4 andeuten, erkennen lassen. Der Reduktionsgrad des in den letzten Reduktionsreaktor eingeleiteten Feinerzes beträgt mehr als 72 %. Auch hier konnte eine durchschnittliche Verlängerung der ununterbrochenen Betriebszeit der Anlage von sechs Monaten erreicht werden.

## Patentansprüche

1. Verfahren zum Reduzieren von teilchenförmigem oxidhältigem Material, insbesondere Feinerz, im Wirbelschichtverfahren, wobei das oxidhältige Material durch ein von unten nach oben strömendes Reduktionsgas in einer Wirbelschicht (24) gehalten und dabei reduziert wird, dadurch gekennzeichnet, daß die Leerrohrgeschwindigkeit des Reduktionsgases ausschließlich oberhalb der Wirbelschicht (24) über den gesamten freien Querschnitt (31, 32, 33) eines oberhalb der Wirbelschicht (24) vorhandenen Raumes kontinuierlich und unter Vermeidung von Wirbelbildungen abgesenkt wird.

2. Verfahren nach Anspruch 1, dadurch gekennzeichnet, daß das Reduzieren des oxidhältigen Materials stufenweise in hintereinander angeordneten Wirbelschichten (24) und unter Zunahme des Reduktionsgrades von Stufe zu Stufe durchgeführt wird, wobei die Absenkung der Leerrohrgeschwindigkeit des Reduktionsgases ab der Stufe durchgeführt wird, ab der ein Mindestreduktionsgrad von 25 % erzielt wird.

3. Verfahren nach Anspruch 1, dadurch gekennzeichnet, daß die Absenkung der Leerrohrgeschwindigkeit des Reduktionsgases ab der Stufe durchgeführt wird, ab der ein Mindestreduktionsgrad von 50 % erzielt wird.

4. Verfahren nach einem oder mehreren der Ansprüche 1 bis 3, dadurch gekennzeichnet, daß die Leerrohrgeschwindigkeit des Reduktionsgases oberhalb der Wirbelschicht (24) um mindestens 25 %, vorzugsweise um mindestens 50 %, abgesenkt wird.

5. Verfahren nach einem oder mehreren der Ansprüche 1 bis 3, dadurch gekennzeichnet daß die Leerrohrgeschwindigkeit des Reduktionsgases von eingangsseitig 0,8 m/s bis 1,5 m/s auf ausgangseitig 0,4 m/s bis 0,75 m/s abgesenkt wird.

6. Verfahren nach einem oder mehreren der Ansprüche 1 bis 5, dadurch gekennzeichnet, daß die Leerrohrgeschwindigkeit in der Wirbelschicht (24) und in einem Raum oberhalb des Raumes, in dem die Absenkung der Leerrohrgeschwindigkeit des Reduktionsgases durchgeführt wird, im wesentlichen konstant gehalten wird.

7. Anlage zur Durchführung des Verfahrens nach einem oder mehreren der Ansprüche 1 bis 6, mit mindestens einem Wirbelschicht-Reduktionsreaktor (1 bis 4), wobei der Wirbelschicht-Reduktionsreaktor (3, 4)
• einen zylindrischen unteren, die Wirbelschicht (24) aufnehmenden Wirbelschichtteil (25) mit einem Gasverteilungsboden (26), eine Zuleitung (17, 19) für das Reduktionsgas und eine Zuführung und Abführung (6) für oxidhältiges Material oberhalb des Gasverteilungsbodens (26),
• einen oberhalb des Wirbelschichtteiles (25) angeordneten und an diesen anschließenden, sich nach oben konisch erweiternden Konusteil (28), wobei die Neigung der Wand (29) des Konusteiles (28) zur Reaktormittelachse (30) maximal 10° beträgt, und
• einen an den Konusteil (28) anschließenden zumindest teilweise zylindrischen Beruhigungsteil (35), der oben geschlossen ist und von dem eine Reduktionsgas-Ableitung (19) ausgeht,
aufweist.

8. Anlage nach Anspruch 7, dadurch gekennzeichnet, daß der Leerrohrquerschnitt im Konusteil (28) um mindestens 25 %, vorzugsweise um mindestens 50 %, zwischen Eintrittsquerschnitt (32) und dem Austrittsquerschnitt (33) des Konusteiles (28) zunimmt.

9. Anlage nach Anspruch 7 oder 8, dadurch gekennzeichnet, daß mindestens ein Staubabscheider (38) innerhalb des Reduktionsreaktors angeordnet ist, wobei dessen Eintrittsöffnung für das staubbeladene Reduktionsgas im Bereich des Beruhigungsteiles (35 ) angeordnet ist und eine Staubrückführleitung (39) des Staubabscheiders (38) bis in den Wirbelschichtteil (25) ragt.

10. Anlage nach einem oder mehreren der Ansprüche 7 bis 9, dadurch gekennzeichnet, daß die Neigung der Wand (29) des Konusteiles (28) zur Reaktormittelachse (30) maximal 8° beträgt.

11. Anlage nach Anspruch 10, dadurch gekennzeichnet, daß die Neigung der Wand (29) des Konusteiles (28) zur Reaktormittelachse (30) in einem Bereich zwischen 6° und 8° liegt.

12. Anlage nach einem oder mehreren der Ansprüche 7 bis 11, dadurch gekennzeichnet, daß die Anlage eine Mehrzahl von hintereinandergeschalteten Wirbelschicht-Reduktionsreaktoren (1 bis 4) umfaßt, die mittels Reduktionsgasleitungen (19) und das oxidhältige Material von Reaktor zu Reaktor führenden Förderleitungen (6) verbunden sind, und daß lediglich die in Förderrichtung des oxidhältigen Materials zuletzt vorgesehenen Reaktoren (3, 4), vorzugsweise nur der zuletzt angeordnete Reaktor (4), mit einem Konusteil (28) versehen ist.

## Claims

1. A process for reducing particulate oxide-containing material, in particular fine ore, in the fluidized bed method, wherein the oxide-containing material, by means of reducing gas flowing from bottom to top, is maintained in a fluidized bed (24), thus being reduced, characterized in that the superficial velocity of the reducing gas, exclusively above the fluidized bed (24), is lowered over the total free cross section (31, 32, 33) of a space present above the fluidized bed (24) continuously and under avoidance of whirl formations.

2. A process according to claim 1, characterized in that reducing of the oxide-containing material is carried out step by step in consecutively arranged fluidized beds (24) and under increase of the degree of reduction from step to step, the superficial velocity of the reducing gas being lowered from that step from which a minimum degree of reduction of 25 % is obtained.

3. A process according to claim 1, characterized in that the superficial velocity of the reducing gas is lowered from that step from which a minimum degree of reduction of 50 % is obtained.

4. A process according to one or several of claims 1 to 3, characterized in that the superficial velocity of the reducing gas above the fluidized bed (24) is lowered by at least 25 %, preferably by at least 50 %.

5. A process according to one or several of claims 1 to 3, characterized in that the superficial velocity of the reducing gas is lowered from 0.8 m/s to 1.5 m/s on the entry side to 0.4 m/s to 0.75 m/s on the exit side.

6. A process according to one or several of claims 1 to 5, characterized in that the superficial velocity in the fluidized bed (24) and in a space above that space in which the superficial velocity of the reducing gas is lowered is kept substantially constant.

7. A plant for carrying out the process according to one or several of claims 1 to 6, comprising at least one fluidized bed reduction reactor (1 to 4), wherein the fluidized bed reduction reactor (3, 4) comprises
• a cylindrical lower fluidized bed section (25) accommodating the fluidized bed (24) and including a gas distribution bottom (26), a supply duct (17, 19) for the reducing gas and a supply duct and a discharge duct (6) for oxide-containing material provided above the gas distribution bottom (26),
• a tapered section (28) arranged above the fluidized bed section (25) and following upon the same while widening conically upwards, the inclination of the wall (29) of the tapered section (28) relative to the central axis (30) of the reactor amounting to 10° at most, and
• an at least partially cylindrical calming section (35) following upon the tapered section (28), which calming section is closed on top and from which a reducing-gas discharge duct (19) departs.

8. A plant according to claim 7, characterized in that the clear cross section in the tapered section (28) increases by at least 25 %, preferably by at least 50 %, between the entry cross section (32) and the exit cross section (33) of the tapered section (28).

9. A plant according to claim 7 or 8, characterized in that at least one dust separator (38) is arranged within the reduction reactor, its entry opening for the dust-loaded reducing gas being provided in the region of the calming section (35) and a dust recycling duct (39) of the dust separator (38) projects into the fluidized bed section (25).

10. A plant according to one or several of claims 7 to 9, characterized in that the inclination of the wall (29) of the tapered section (28) relative to the central axis (30) of the reactor is 8° at most.

11. A plant according to claim 10, characterized in that the inclination of the wall (29) of the tapered section (28) relative to the central axis (30) of the reactor ranges between 6° and 8°.

12. A plant according to one or several of claims 7 to 11, characterized in that the plant comprises a plurality of consecutively connected fluidized bed reduction reactors (1 to 4) connected by means of reducing gas ducts (19) and by means of conveying ducts (6) conveying the oxide-containing material from one reactor to another reactor, and that merely the reactors (3, 4) provided last in the flow direction of the oxide-containing material, preferably merely the last arranged reactor (4), is/are provided with a tapered section (28).

## Revendications

1. Procédé pour réduire du matériau en particules contenant des oxydes, en particulier du minerai affiné, suivant un procédé en couche fluidisée, dans lequel le matériau contenant des oxydes est maintenu sous forme d'une couche fluidisée (24) traversée par un gaz réducteur qui s'écoule du bas vers le haut et est alors réduit, caractérisé en ce que la vitesse à vide du gaz réducteur exclusivement au-dessus de la couche fluidisée (24) et sur la totalité de la section libre (31, 32, 33) d'un espace existant au-dessus de la couche fluidisée (24) est réduite de façon continue et en évitant la formation de turbulences.

2. Procédé selon la revendication 1, caractérisé en ce que la réduction du matériau contenant des oxydes est menée suivants des étapes dans des couches fluidisées (24) agencées les unes derrière les autres et avec augmentation du degré de réduction d'une étape à la suivante, et la diminution de la vitesse à vide du gaz réducteur est réalisée à partir de l'étape à partir de laquelle on atteint un degré de réduction minimum de 25%.

3. Procédé selon la revendication 1, caractérisé en ce que la réduction de la vitesse à vide du gaz réducteur est réalisée à partir de l'étape à partir de laquelle on atteint un degré de réduction minimum de 50%.

4. Procédé selon l'une ou plusieurs des revendications 1 à 3, caractérisé en ce que la vitesse à vide du gaz de réduction au-dessus de la couche fluidisée (24) est réduite d'au moins 25%, de préférence d'au moins 50%.

5. Procédé selon l'une ou plusieurs des revendications 1 à 3, caractérisée en ce que la vitesse à vide du gaz réducteur est réduite depuis 0,8 m/s à 1,5 m/s à l'entrée jusqu'à 0,4 m/s à 0,75 m/s à la sortie.

6. Procédé selon l'une ou plusieurs des revendications 1 à 5, caractérisé en ce que la vitesse à vide dans la couche fluidisée (24) et dans un espace au-dessus de l'espace dans lequel on procède à la réduction de la vitesse à vide du gaz réducteur, est maintenue sensiblement constante.

7. Installation pour mise en oeuvre du procédé selon l'une ou plusieurs des revendications 1 à 6, comprenant au moins un réacteur de réduction à couche fluidisée (1 à 4), et dans laquelle le réacteur de réduction à couche fluidisée (3, 4) comprend :
- une partie cylindrique inférieure (25) qui reçoit la couche fluidisée (24) avec un fond de distribution de gaz (26), une conduite d'amenée (17, 19) pour le gaz réducteur et une conduite d'amenée et d'évacuation (6) pour le matériau contenant des oxydes au-dessus du fond de distribution gaz (26),
- une partie conique (28) agencée au-dessus de la partie (25) pour la couche fluidisée et se raccordant à celle-ci en s'élargissant de façon conique vers le haut, dans laquelle l'inclinaison de la paroi (29) de la partie conique (28) par rapport à l'axe central du réacteur (30) s'élève au maximum à 10°, et
- une partie de détente (35) au moins partiellement cylindrique et se raccordant à la partie conique (28), ladite partie de détente étant refermée en haut et une conduite d'évacuation de gaz réducteur (19) partant de celle-ci.

8. Installation selon la revendication 7, caractérisée en ce que la section à vide dans la partie conique (28) augmente d'au moins 25%, de préférence d'au moins 50%, entre la section d'entrée (32) et la section de sortie (33) de la partie conique (28).

9. Installation selon l'une ou l'autre des revendications 7 et 8, caractérisée en ce qu'au moins un séparateur de poussière (38) est agencé à l'intérieur du réacteur de réduction, son ouverture d'entrée pour le gaz réducteur chargé de poussière étant agencée dans la région de la partie de détente (35), et une conduite de retour de poussière (39) du séparateur de poussière (38) s'étendant jusque dans la partie (25) de la couche fluidisée.

10. Installation selon l'une ou plusieurs des revendications 7 à 9, caractérisée en ce que l'inclinaison de la paroi (29) de la partie conique (28) par rapport à l'axe central du réacteur (30) s'élève au maximum à 8°.

11. Installation selon la revendication 10, caractérisée en ce que l'inclinaison de la paroi (29) de la partie conique (28) par rapport à l'axe central du réacteur (30) est située dans une plage entre 6° et 8°.

12. Installation selon l'une ou plusieurs des revendications 7 à 11, caractérisée en ce que l'installation comporte une pluralité de réacteurs de réduction (1 à 4) à couche fluidisée branchés les uns derrière les autres, lesquels sont reliés au moyen de conduites pour le gaz réducteur (19) et de conduites d'alimentation (6) qui mènent le matériau contenant des oxydes d'un réacteur au suivant, et en ce que seuls les réacteurs (3, 4) prévus en dernier lieu dans la direction de convoyage du matériau contenant des oxydes sont pourvus d'une partie conique (28), et de préférence uniquement le dernier réacteur (4).
